# NEW EUROPEAN PATENT SPECIFICATION

(11) **EP 1 885 795 B2**
(45) Date of publication and mention of the opposition decision: **05.03.2014**
(45) Mention of the grant of the patent: 31.12.2008
(21) Application number: 06771934.4
(22) Date of filing: 02.06.2006
(51) Int. Cl.: C08L 23/08, C08L 23/16, B01D 53/28, B65D 81/26, B29C 45/00

(54) **DESICCANT PLASTIC COMPOSITION FOR A SHAPED ARTICLE**
ANTIKONDENSATIONS-KUNSTSTOFFZUSAMMENSETZUNG FÜR EINEN GEFORMTEN ARTIKEL
COMPOSITION PLASTIQUE DESSECHANTE POUR ARTICLE PROFILE

(30) Priority: 02.06.2005 US 687098 P
(43) Date of publication of application: 13.02.2008
(73) Proprietor: CSP Technologies, Inc., Amsterdam, NY 12010 (US)
(72) Inventor: GIRAUD, Jean, Pierre, Auburn, Alabama 36830-1295 (US)
(74) Representative: Maiwald Patentanwalts GmbH
(86) International application number: PCT/US2006/021439
(87) International publication number: WO 2006/130827

(56) References cited:
- EP-A- 1 000 873
- EP-A- 1 421 991
- EP-A1- 0 599 690
- US-A- 6 130 263
- US-B1- 6 696 002

## Description

### BACKGROUND

Many products, such as diagnostic test strips, pharmaceuticals, medical devices and electronics are sensitive to environmental effects such as moisture. Desiccants are incorporated within product packages to scavenge moisture that enters the package during shelf life and to absorb any latent moisture in the product. Conventionally, desiccants are available in granular form and are packaged in a canister or sachet.

### BRIEF DESCRIPTION OF THE DRAWINGS

The following figures are merely illustrative of the present invention and are not meant to limit the invention to the embodiments shown in the figures.

Figure A illustrates an embodiment of the present invention by graphing samples A and B and samples 3 - 8 and CE 1 through CE 12.

Figures B1 and B2 illustrate an embodiment of the present invention by detailing the samples for Examples 3 - 8 and comparative samples.

Among those benefits and improvements that have been disclosed, other objects and advantages of this invention will become apparent from the following description taken in conjunction with the accompanying figures. The figures constitute a part of this specification and include illustrative embodiments of the present invention and illustrate various objects and features thereof.

### SUMMARY OF THE INVENTION

The present invention pertains to a shaped article comprising an injection molded desiccant plastic composition, wherein the shaped article is a cylinder with an outside diameter of at least 8.00 mm, a wall thickness of at least 0.4 mm and an overall length of at least 50.0 mm,
wherein the desiccant plastic composition comprises a desiccant, a base polymer of a thermoplastic polymer and an elastomer,
wherein the thermoplastic is high density polyethylene having a tensile strength at yield of at least 25 MPa measured using ISO 527-2,
wherein the desiccant is silica gel, wherein the loading of the desiccant can range from 30 to 50 % (weight),
wherein the elastomer is EVA co-polymer, and
wherein the resulting shaped article has properties including a moisture uptake rate of at least 20 mg in 24 hour measured by the Desiccant Rate of Absorption Test Procedure and a stiffness of at least 25 Newtons measured by the Mechanical Resistance Control test method.

### DETAILED DESCRIPTION OF THE INVENTION

Detailed embodiments of the present invention are disclosed herein; however, it is to be understood that the disclosed embodiments are merely illustrative of the invention that may be embodied in various forms. In addition, each of the examples given in connection with the various embodiments of the invention are intended to be illustrative, and not restrictive. Further, the figures are not necessarily to scale, some features may be exaggerated to show details of particular components. Therefore, specific structural and functional details disclosed herein are not to be interpreted as limiting, but merely as a representative basis for teaching one skilled in the art to variously employ the present invention.

The shaped article according to the present invention exhibits novel absorption and structural properties. For example, such novel structural and absorption properties include novel absorption kinetics (e.g., rate of moisture absorption) with novel mechanical strength to resists cracking or breaking. Examples of these packages include tablet dispensers, diagnostic strip dispensers and single unit rigid packaging (e.g., a custom container or non-cylindrical package).

The desiccant, which can be used in the composition is silica gel. It obtains its moisture absorbing capabilities through physical absorption. The absorption process is accomplished because of a fine capillary morphology of the desiccant particles which pulls moisture therethrough. The pore size of the capillaries, as well as the capillaries' density determine the absorption properties of the desiccant. Examples of these physical absorption desiccants include molecular sieves, silica gels, clays and starches. Because these types of physical absorption desiccants are both inert and non-water soluble, they are preferred for many applications. Among other reasons, these innocuous characteristics are particularly compatible with food products and medicinal products that may be enclosed within containers formed from the desiccant entrained polymers, or at least exposed thereto.

In another embodiment, the shaped article according to the present invention includes one or more of the following: desiccant plastic compositions comprising formulations of the type exemplified in the examples, which are detailed below, that are used to mold shaped articles comprising 3-phase compositions. A 3-phase composition is one that consists of a desiccating agent and 2-immiscible polymers.The shaped article is a cylinder with an OD of at least 8.00 mm and a wall thickness of at least 0.4 mm and an overall length of at least 50.0 mm. The present invention also includes a 24-hour moisture uptake rate of the cylinder of at least 20 mg in 24 hour measured by the "Desiccant Rate of Absorption Test Procedure" and a stiffness of the cylinder of at least 25 Newtons measured by the "MECHANICAL RESISTANCE CONTROL" test method. In yet another embodiment, the composition comprises a base resin of HDPE with a tensile strength at yield of at least 25 MPa measured using ISO 527-2, vinyl acetate content in the EVA used in the composition is 18 to 33 %, and a desiccant of Silica Gel.

The loading of the desiccant can range from 30 to 50%, more particularly 35 to 45% (weight). The thermoplastic is HDPE. By varying the desiccant loading and channeling agent in the plastic formulation, the overall moisture capacity and uptake rate of the desiccant entrained plastic can be controlled.

An injection molded cylindrical-shaped part with a length of 50.00 mm, outside Diameter of 8.20 mm and a wall thickness of 0.6 mm was used in this example. The part was composed of a desiccant plastic composition consisting of silica gel desiccant, HDPE, EVA-copolymer and calcium carbonate.

Suitable elastomers are ethylene-vinyl acetate copolymers (EVA).

The desiccant plastic compound was manufactured in an extrusion process and formed into continuous strands. These strands were cut into pellets that can be used in an injection molding process to manufacture a shaped article. The materials were compounded in a dry environment maintained at about 22C/5%RH.

In one embodiment, the cylindrical shaped part had the following requirements:
1. Total Moisture Capacity -- > 80 mg measured by the "Desiccant Rate of Absorption Test Procedure."
2. 24-hour Moisture Capacity --> about 20 mg measured at 22C/80% RH measured by the "Desiccant Rate of Absorption Test Procedure."
3. Stiffness --> about 25 N - Measured resistance of a rod applying a downward force to the cylindrical part measured by the "Mechanical Resistance Control" test-method.
4. Brittleness - no part cracks or breaks on resistance test setup.
5. Ability to form the parts in the mold without excessive flash or injection pressure.
The following is the test method for "Mechanical Resistance Control."
Equipment:
Tension/Compression test rig « Ultratest 1000N»
Force gage «AFG1000N »
6mm diameter compression rod
Part Support fixture
Personal Computer
Software « Dataplot »
Instructions
   1. Setup the Part support fixture and the AFG1000N force gage on the Ultratest 1000N test rig as shown on picture 1 and 2 and in such a manner that:
      ➢ the central axis of the compression rod is placed perpendicular to the central axis of a cap placed in the support fixture
      ➢ the central axis of the compression rod is placed at 4mm ± 1mm of the cap edge. 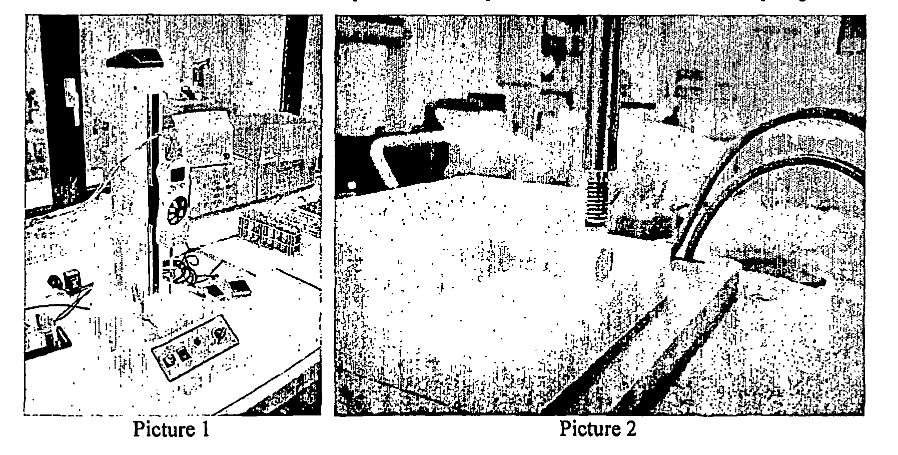
      Setup the mechanical limit stops at the rear of the test rig on the « G » marks in such a manner that :
      ➢ the lower limit stop allows the movement of the compression rod down to the theoretical central axis of the cap.
      ➢ the upper limit stop allows a movement of the compression rod high enough for removing and inserting the cap in its support
   2. Launch the « Dataplot » software on the personal computer
   3. Create a new file and record the file name
   4. Switch on the force gage and the test rig
   5. Setup the speed of the test rig at 50mm/min
   6. Push the test starting pedal in order to bring the compression rod to the upper limit stop.
   7. Insert the cap to be tested into the support fixture.
   8. Reset the maximum force recorded in the force gage.
      Create a new measurement in the dataplot software.
   9. Click on « START » on the screen to start the recording of the force data and push the pedal to start the descent of the compression rod.
   10. When the force gage reaches the lower limit stop, the force gage goes automatically back to the upper limit stop. Click on « STOP » on the screen to stop the recording of the force data.
   11. Print the curve on the screen
   12. Record the maximum deflection force shown on the force gage.
   13. Check at the aspect of the part tested, record and localize any stress cracks or part failure.
   14. Insert a new part in the support and repeat operations 8 to 14.
The following is the test method for "Desiccant Rate of Absorption Test Procedure."
Equipment:
*Weigh Dish*: Aluminum dish used for weighing material on a balance.
*Micro balance*: Balance with accuracy to 1 microgram.
*Environmental Chamber*: Machine, which can control the humidity and temperature inside its chamber.
Micro Balance or Analytical Balance
Procedure or Instruction

### Procedure

Preset the calibrated Environmental Chamber to the required % Relative Humidity and temperature test conditions.

Label weigh dish to identify it with the material to be tested. If sample is sufficient in size, it may be labeled directly on the sample.
When sample is less than 2 grams, place weigh dish onto a calibrated microbalance and record weight of the dish to 1 microgram accuracy. Record results into a computer spreadsheet.

Press the tare on scale to remove weight of dish from balance or tare the analytical balance for samples greater than 2 grams in weight and record weight to the nearest 0.0001 grams.
Add material to be tested into weigh dish or on balance depending on sample size and place back on balance.
Record the weight of the material to the nearest microgram. Record results into a computer spreadsheet.
Place weigh dish with sample or sample into the preset environmental chamber.
Leave sample in chamber for required time.

The following examples are intended to be illustrative, and not restrictive. The samples were an injection molded cylindrical-shaped part with a length of 50.00 mm, outside Diameter of 8.20 mm and a wall thickness of 0.6 mm was used in this example. The part was composed of a desiccant plastic composition consisting of silica gel desiccant, HDPE, EVA-copolymer and/or calcium carbonate. "Elvax 250" is DuPont's Elvax 250 - ethylene-vinyl acetate copolymer resin. "ME50005" is "Multibatch ME 50004" made by Multibase. "Polybatch 8160" is Polybatch white 8160 made by A. Schulman - a white materbatch colorant. "M80063S" is Sabic HDPE M80063S made by Sabic - high density polyethylene for injection molding. "SG11" is silica gel adsorbent Grade 11 made by W.R. Grace & Co.

### Example #1:

The following is the composition of samples A and B (weight basis).

| | |
|---|---|
| | **Grace SG Grade 11 --- 35%** |
| | **Sabic A6016L HDPE -- 58.5%** |
| | **Elvax 250 -- 5%** |
| | **White 1005566 - 1.0%** |
| **A** | **Calcium carbonate 0.5%** |
| | **Grace SG Grade 11 --- 40%** |
| | **Sabic HDPE --- 54%** |
| | **Elvax 250 -- 5%** |
| | **White 1005566 - 1.0%** |
| **B** | **Calcium carbonate 0%** |

Figure A shows that samples A and B exhibit the novel stiffness and moisture uptake rate of the present invention. It is believed that the HDPE provides structural integrity to the part, the EVA (Elvax) enhances the moisture absorption, the White 1005566 is a colorant, and the Silica Gel is the desiccant.

### EXAMPLE #2

The following is an example of another embodiment of the present invention. It is understood that, in another embodiment, "white masterbatch" may be eliminated. It is understood, in another embodiment, that the EVA amount may vary in the range of 3 % to 10%, the CaCO3 amount may vary in the range of 0.25% to 1%.

| **Material Reference** | **Decription** | **Manufacturer** | **Weight Percentage** |
|---|---|---|---|
| M80063S | HDPE | SABIC | 57.62% |
| Polybatch 8160 | White masterbatch (60% Ti02) - PE based | Schulman | 1.67% |
| SG11 | Silica Gel grade 11 | Grace | 35% |
| ME50004 | CaCO3 Masterbatch (70%CaC03) - PE based | Multibase | 0.71% |
| Elvax 250 | EVA | Dupont | 5% |

### Examples 3 - 8 and Comparative Examples CE 1 - CE 12

Figure B1 and B2 illustrate additional examples of the present invention. Samples 3 through 8, under the column marked "Composition," are examples of compositions of the present invention. Samples CE 1 through CE 12 are examples of comparative examples (for each comparative example, the chart details the reason or reasons why the sample failed). Figure A shows that samples 3 through 8 exhibit the novel stiffness and moisture uptake rate of the present invention.

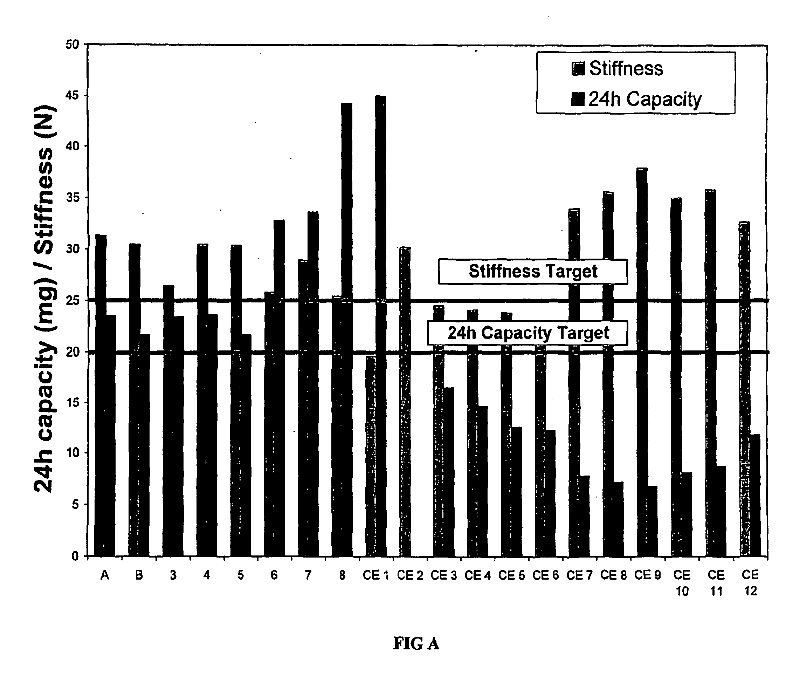

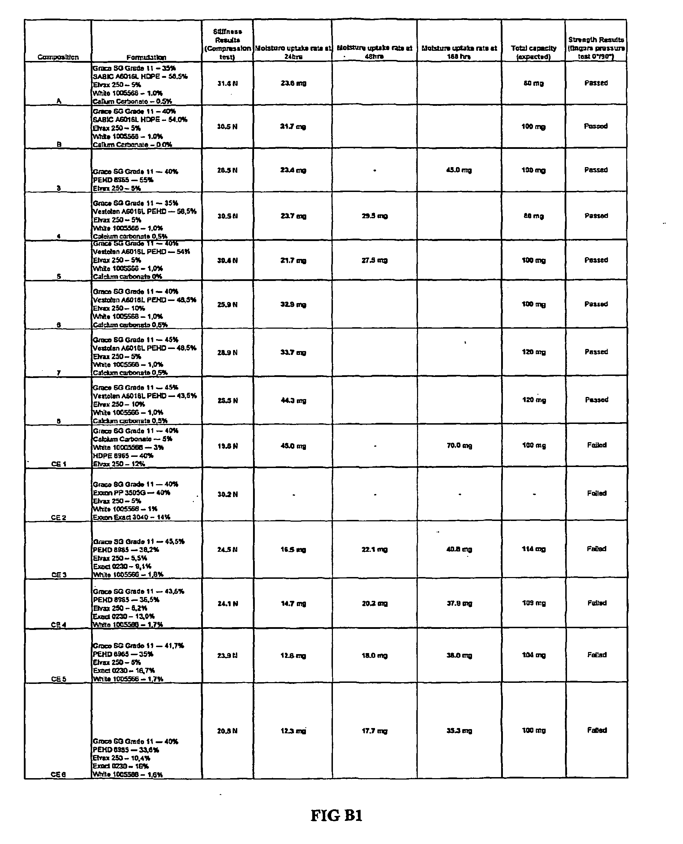

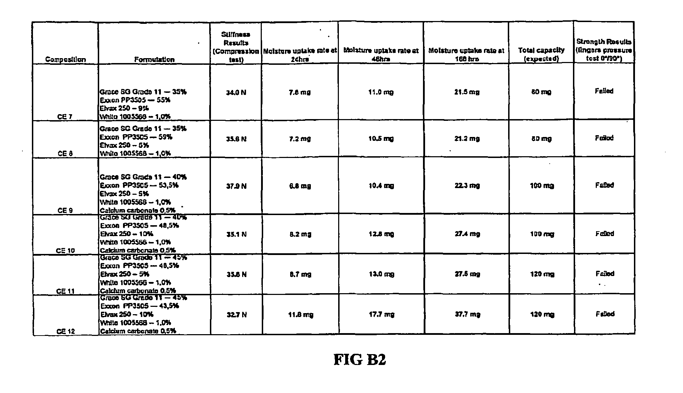

## Claims

1. A shaped article comprising an injection molded desiccant plastic composition,
wherein the shaped article is a cylinder with an outside diameter of at least 8.00 mm, a wall thickness of at least 0.4 mm and an overall length of at least 50.0 mm,
wherein the desiccant plastic composition comprises a desiccant, a base polymer of a thermoplastic polymer and an elastomer,
wherein the thermoplastic is high density polyethylene having a tensile strength at yield of at least 25 MPa measured using ISO 527-2,
wherein the desiccant is silica gel, wherein the loading of the desiccant can range from 30 to 50 % (weight),
wherein the elastomer is EVA co-polymer, and
wherein the resulting shaped article has properties including a moisture uptake rate of at least 20 mg in 24 hour measured by the Desiccant Rate of Absorption Test Procedure and a stiffness of at least 25 Newtons measured by the Mechanical Resistance Control test method.

## Patentansprüche

1. Geformter Gegenstand, der eine spritzgegossene, ein Trocknungsmittel enthaltende Kunststoff-Zusammensetzung umfasst, wobei der geformte Gegenstand ein Zylinder mit einem Außendurchmesser von wenigstens 8,00 mm, einer Wanddicke von wenigstens 0,4 mm und einer Gesamtlänge von wenigstens 50,0 mm ist, wobei die Trocknungs-Kunststoff-Zusammensetzung ein Trocknungsmittel, ein Basispolymer aus einem thermoplastischen Polymer und ein Elastomer umfasst,
das thermoplastische Material ein Polyethylen mit hoher Dichte ist, das beim Nachgeben eine Zugfestigkeit von wenigstens 25 MPa gemessen unter Verwendung von ISO 527-2 aufweist,
wobei das Trocknungsmittel Kieselgel ist,
wobei die Beladung des Trocknungsmittels im Bereich von 30.-% bis 50 Gew.-% liegen kann,
wobei das Elastomer ein EVA-Copolymer ist, und
wobei der sich ergebende geformte Gegenstand Eigenschaften aufweist, die eine Feuchtigkeits-Aufnahmerate von wenigstens 20 mg in 24 Stunden gemessen mit dem Desiccant Rate of Absorption Test-Verfahren und eine Steifigkeit von wenigstens 25 Newton gemessen mit dem Mechanical Resistance Control Test-Verfahren aufweist.

## Revendications

1. Article profilé comprenant une composition plastique desséchante moulée par injection, dans lequel l'article profilé est un cylindre avec un diamètre externe d'au moins 8,00 mm, une épaisseur de paroi d'au moins 0,4 mm et une longueur totale d'au moins 50,0 mm, dans lequel la composition plastique desséchante comprend un dessicant, un polymère de base d'un polymère thermoplastique et un élastomère,
dans lequel le thermoplastique est un polyéthylène à haute densité ayant une résistance d'elasticité à la traction d'au moins 25 MPa mesurée en utilisant la norme ISO 527-2,
dans lequel le dessicant est du gel de silice,
dans lequel la charge du dessicant peut aller de 30 à 50 % (en poids),
dans lequel l'élastomère est un copolymère d'EVA, et
dans lequel l'article profilé résultant a des propriétés comprenant un taux d'absorption d'humidité d'au moins 20 mg en 24 heures mesuré par la procédure de test de taux d'absorption de dessicant et une rigidité d'au moins 25 Newtons mesurée par le procédé de test de contrôle de résistance mécanique.
